# EUROPÄISCHE PATENTSCHRIFT

(11) **EP 1 698 495 B1**
(45) Veröffentlichungstag und Bekanntmachung des Hinweises auf die Patenterteilung: **27.05.2009**
(21) Anmeldenummer: 05028125.2
(22) Anmeldetag: 22.12.2005
(51) Int. Cl.: B60G 3/20, B60G 11/18, B60G 11/20, B60G 11/50

(54) **Radaufhängung**
Wheel suspension
Suspension de roue

(30) Priorität: 02.03.2005 DE 102005009430
(43) Veröffentlichungstag der Anmeldung: 06.09.2006
(73) Patentinhaber: Dr. Ing. h.c. F. Porsche Aktiengesellschaft, 70435 Stuttgart (DE)
(72) Erfinder: Kunert, Reinhard, 71287 Weissach (DE); Zschocke, Swen, 09569 Schoenerstadt (DE)

(56) Entgegenhaltungen:
- EP-A- 1 157 863
- GB-A- 598 002
- GB-A- 2 187 524
- US-A- 4 540 197
- US-A1- 2002 190 493
- PATENT ABSTRACTS OF JAPAN Bd. 014, Nr. 339 (M-1001), 23. Juli 1990 (1990-07-23) & JP 02 117409 A (MITSUBISHI MOTORS CORP), 1. Mai 1990 (1990-05-01)
- PATENT ABSTRACTS OF JAPAN Bd. 014, Nr. 339 (M-1001), 23. Juli 1990 (1990-07-23) & JP 02 117410 A (SHOWA MFG CO LTD), 1. Mai 1990 (1990-05-01)

## Beschreibung

Die Erfindung bezieht sich auf eine Radaufhängung nach dem Oberbegriff des Anspruchs 1.

Aus dem Buch Reimpell, Jörnsen, 1. Auflage - 1986, Seite 307, ist eine Hinterachse für ein Kraftfahrzeug mit kurzen Drehstäben bekannt, die mit einer Radaufhängung zusammenwirkend in Verbindung stehen.

Aus der EP 1 157 863 A2 ist eine Radaufhängung für ein Kraftfahrzeug bekannt, wobei Radführungslenker und ein Drehstab vorgesehen sind, wobei der Drehstab über eine Verstellvorrichtung mit einem Teil des Fahrzeugrahmens verbunden ist, und wobei die Verstellvorrichtung einen mit einer Feder gekoppelten Hebel aufweist.

Aufgabe der Erfindung ist es, eine verbesserte Radaufhängung mit Drehstabfeder zu schaffen, über die eine unterschiedliche Radfederrate erzielbar ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, dass bei niedrigen Lasten, d.h. bei Ausfederungsvorgängen, zwei hintereinander geschaltete Federn, nämlich eine Drehstabfeder und ein Federungselement, wie beispielsweise eine Schraubenfeder, zum Einsatz kommen. Bei höheren Lasten, wie bei Einfederungsvorgängen, wird das Federungselement über eine Stelleinrichtung überbrückt und es wirkt nur noch die Drehstabfeder. Dies wird erreicht, indem mit einer gelenkig an einem Radträger gehaltenen und sich in Fahrzeugquerrichtung erstreckenden Druckstange eine in Fahrzeuglängsrichtung ausgerichtete und am Fahrzeugaufbau in Lagern abgestützte Drehstabfeder über einen Winkelhebel verbunden ist. Die Drehstabfeder weist eine am freien Ende gehaltene Stelleinrichtung auf, welche mit einem Federungselement zusammenwirkend ist.

Des weiteren ist nach der Erfindung vorgesehen, dass die Stelleinrichtung einen auf der Drehstabfeder gehaltenen Winkelhebel umfasst, welcher über eine Stellstange mit dem Federungselement zusammenwirkend verbunden ist. Die Stellstange wirkt mit einer Distanzhülse zusammen, die zwischen einem Hülsenbund und einem Widerlager am Fahrzeugaufbau das Federungselement in Lage hält. Durch diese Anordnung wird über die Druckstange, welche mit einem Radträger gelenkig verbunden wird, eine Verstellwirkung auf die Drehstabfeder und somit auch auf die Stelleinrichtung für das Federungselement unmittelbar ausgeübt, und zwar in Abhängigkeit von Radfederungsvorgängen.

Nach der Erfindung besteht das Federungselement beispielsweise aus einer Spiralfeder, die bei Radfederungsvorgängen in einer Federungsstellung bei geringeren Radlasten bei niedrigen Federraten bis zu einer Blockierstellung bei höheren Radlasten mit hohen Federraten verstellbar ist. Durch diese beiden möglichen Stellungen des Federungselements mit Zwischenstellungen kann in einfacher Weise nach der Erfindung zum einen bei geringen Radlasten, wie bei Ausfederungsvorgängen, das Federungselement zugeschaltet werden und wirkt mit der Drehstabfeder zusammen, und zum anderen ist bei höheren Radlasten, wie bei Einfederungsvorgängen, das Federungselement abgeschaltet und es kann nur noch die Drehstabfeder wirken. Hierzu ist nach der Erfindung vorgesehen, dass in der Federungsstellung das Federungselement in Reihe geschaltet mit der Drehstabfeder ausgebildet ist und dass in der Blockierstellung das Federungselement ausgeschaltet und die Distanzhülse am Widerlager abgestützt ist und die Drehstabfeder ein einziges Federungselement bildet.

Ein Ausführungsbeispiel der Erfindung ist in den Zeichnungen dargestellt und wird im folgenden näher beschrieben.

### Es zeigen

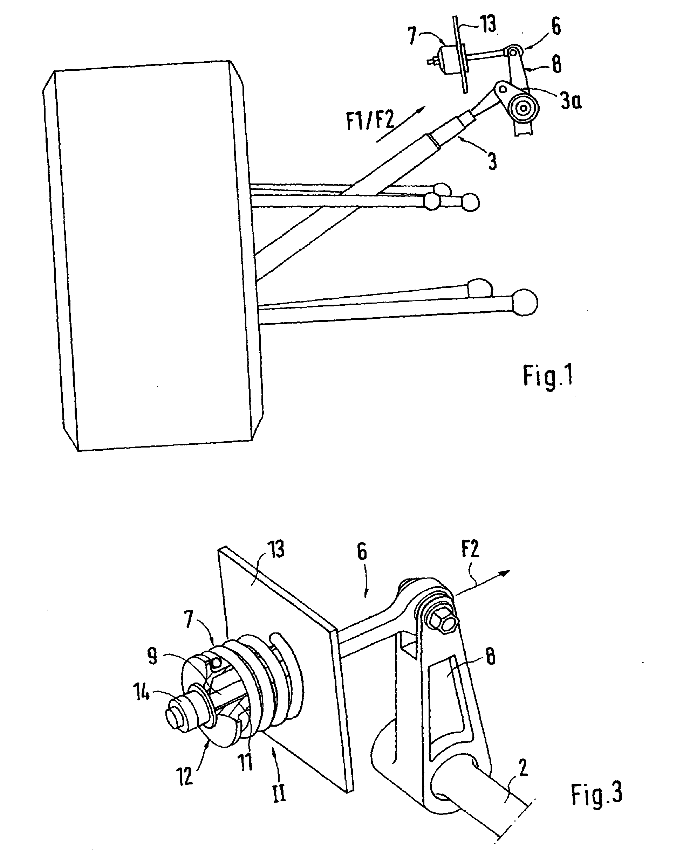

- Fig. 1: eine Ansicht auf eine Radaufhängung mit Drehstabfeder, Stelleinrichtung und Federungselement von vorne gesehen,
- Fig. 2: eine Ansicht auf eine Radaufhängung gemäß Fig. 1 in schaubildlicher Darstellung,
- Fig. 3: eine schaubildliche Darstellung auf die Stelleinrichtung mit Federungselement in einer Blockierstellung, und
- Fig. 4: eine schaubildliche Darstellung auf die Stelleinrichtung mit Federungselement in einer Federungsstellung.

Eine Radaufhängung 1, insbesondere eine Hinterradaufhängung für ein Kraftfahrzeug, weist zusätzlich für ein Rad jeweils eine Drehstabfeder 2 auf, die unter Zwischenschaltung eines Winkelhebels 3a mit einer Druckstange 3 verbunden ist, welche am Radträger gelenkig gelagert wird. Die Drehstabfeder 2 ist in Lagern 4, 5 aufbauseitig gehalten, zwischen denen der Winkelhebel 3a angeordnet ist. Endseitig der Drehstabfeder 2, an dem den Lagern 4, 5 abgekehrten freien Ende, ist eine Stelleinrichtung 6 für ein Federungselement 7 angeordnet.

Die Stelleinrichtung 6 umfasst einen mit der Drehstabfeder 2 fest verbundenen Winkelhebel 8, der an einer Stellstange 9 gelenkig gehalten ist, die mit einer Distanzhülse 11 zusammenwirkt, auf der das Federungselement 7 angeordnet ist. Zwischen einem Hülsenbund 12 der Distanzhülse 11 und einem aufbauseitigen Widerlager 13 des Fahrzeugs ist das Federungselement 7 gelagert. Zur Verbindung mit der die Distanzhülse 11 durchdringenden Stellstange 9 weist diese endseitig ein Abstützelement 14 zur Kopfplatte 15 der Distanzhülse 11 auf.

Die Drehstabfeder 2 erstreckt sich in Fahrzeuglängsrichtung FL, wobei die Druckstange 3 sich zu der Drehstabfeder 2 in Fahrzeugquerrichtung Fq erstreckt. Je nach Ausrichtung und Anlenkung der einzelnen Radführungslenker L kann die Drehstabfeder 2 nach der Erfindung ausgerichtet sein, so dass die gezeigte Anordnung der Drehstabfeder 2 mit der Druckstange 3 nur eine beispielhafte Ausführung darstellt.

Bei einer Radein- oder Ausfederungsbewegung wird über die Druckstange 3 mittels des fest mit der Drehstabfeder 2 verbundenen Winkelhebels 3a die Drehstabfeder 2 entsprechend verdreht, so dass über die Stelleinrichtung 6 das Federungselement 7 auf der Distanzhülse 11 in eine Federungsstellung I sowie in eine Blockierstellung II verstellt werden kann.

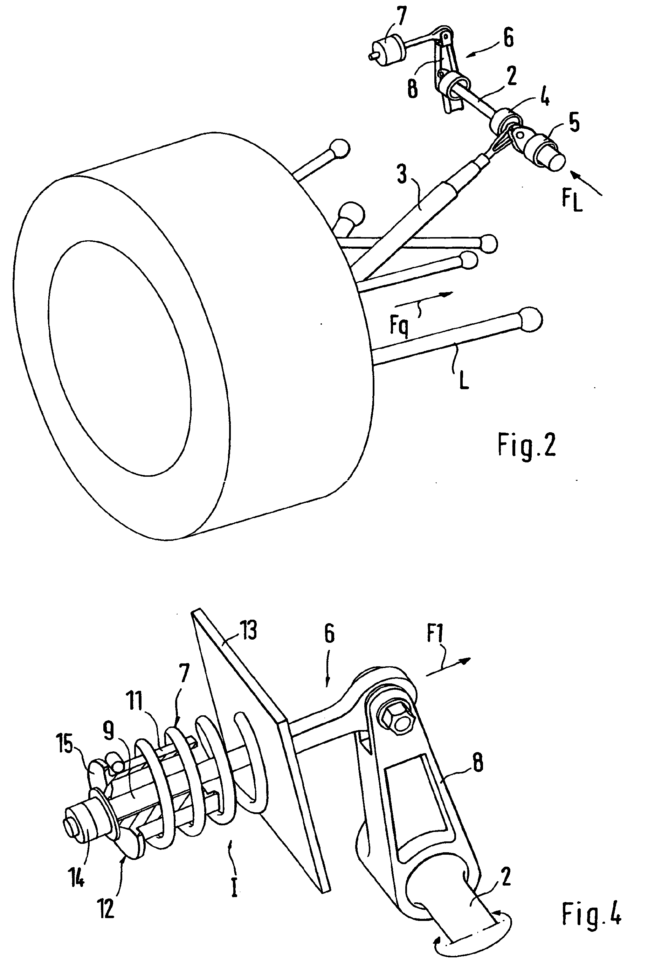

In Fig. 4 ist die Federungsstellung I gezeigt, bei der das Federungselement 7 entspannt ist und federnd wirkt. Diese Federungsstellung 1 wird bei geringen Radlasten F1 eingenommen. Die weitere mögliche Blockierstellung II wird bei höheren Radlasten F2 eingenommen, in der das Federungselement 7 abgeschaltet ist, da die Stellstange 9 das Federungselement 7 über die Distanzhülse 11 auf Block gezogen hat. Nunmehr kann die Drehstabfeder weiterhin auf Torsion beansprucht werden.

Als Federungselement 7 kann eine Spiralfeder oder auch ein elastisches Element verwendet werden. Die Spiralfeder kann nach einer weiteren Ausführung im Querschnitt der Windungen eine quadratische oder rechteckförmige Form aufweisen, wobei die Distanzhülse 11 dann entfällt. Hierdurch wird bei einer Stellung der Feder auf Block erreicht, dass die Windungen der Feder 7 ohne Distanzhülse 11 unmittelbar aufeinanderliegen.

## Patentansprüche

1. Radaufhängung für ein Kraftfahrzeug mit Radführungslenkern und einer Drehstabfederung, mit einer in Fahrzeuglängsrichtung (FL) ausgerichteten und am Fahrzeugaufbau in Lagern (4, 5) abgestützten Drehstabfeder (2), wobei die Drehstabfeder (2) eine am freien Ende gehaltene Stelleinrichtung (6) aufweist, welche mit einem Federungselement (7) zusammenwirkend ist, wobei die Stelleinrichtung (6) einen mit der Drehstabfeder (2) verbundenen Winkelhebel (8) umfasst, welcher über eine Stellstange (9) mit dem Federungselement (7) verbunden ist und dieses eine Federungs-und Blockierstellung (I und II) einnimmt, **dadurch gekennzeichnet, dass** die Drehstabfeder (2) mit einer gelenkig an einem Radträger gehaltenen und sich in Fahrzeugquerrichtung (Fq) erstreckenden Druckstange (3) über einen mit der Drehstabfeder (2) befestigten Winkelhebel (3a) verbunden ist, und dass die Stellstange (9) mit einer Distanzhülse (11) verbunden ist, die zwischen einem Hülsenbund (12) und einem Widerlager (13) am Fahrzeugaufbau das Federungselement (7) hält, wobei das Federungselement (7) auf der Distanzhülse (11) angeordnet ist, wobei die Distanzhülse (11) in der Federungsstellung (I) bei entspanntem Federungselement (7) in der Länge kürzer ausgeführt ist als das Federungselement (7) und die Distanzhülse (11) sich in der Blockierstellung (II) am Widerlager (13) abstützt.

2. Radaufhängung nach Anspruch 1, **dadurch gekennzeichnet, dass** das Federungselement (7) aus einer Spiralfeder besteht und bei Radfederungsvorgängen von der Federungsstellung (I) bei geringen Radlasten (F1) mit niedriger Federrate bis zu der Blockierstellung (II) bei hohen Radlasten (F2) und hohen Radfederraten verstellbar ist.

3. Radaufhängung nach einem der vorhergehenden Ansprüche, **dadurch gekennzeichnet, dass** in der Federungsstellung (I) das Federungselement (7) in Reihe geschaltet mit der Drehstabfeder (2) ausgebildet ist.

4. Radaufhängung nach einem der vorhergehenden Ansprüche, **dadurch gekennzeichnet, dass** in der Blockierstellung (II) das Federungselement (7) ausgeschaltet ist und die Distanzhülse (11) am Widerlager (13) abgestützt ist und die Drehstabfeder (2) ein einziges Federungselement bildet.

5. Radaufhängung nach Anspruch 1, **dadurch gekennzeichnet, dass** das Federelement (7) aus einer Spiralfeder mit rechteckförmigen oder quadratischem Querschnitt der einzelnen Windungen besteht.

## Claims

1. Wheel suspension system for a motor vehicle having wheel control links and a torsion-bar suspension, comprising a torsion-bar spring (2) which is oriented in the vehicle longitudinal direction (FL) and supported on the vehicle body in bearings (4, 5), wherein the torsion-bar spring (2) has an adjusting device (6) which is held on the free end and which interacts with a spring element (7), wherein the adjusting device (6) comprises an angle lever (8) which is connected to the torsion-bar spring (2) and which is connected via an adjusting rod (9) to the spring element (7), and this spring element adopts deflection and blocking positions (I and II), **characterized in that** the torsion-bar spring (2) is connected via an angle lever (3a), which is fastened with the torsion-bar spring (2), to a pressure rod (3) which is held on a wheel carrier in an articulated manner and which extends in the vehicle transverse direction (Fq), and **in that** the adjusting rod (9) is connected to a spacer sleeve (11) which holds the spring element (7) between a sleeve collar (12) and an abutment (13) on the vehicle body, wherein the spring element (7) is arranged on the spacer sleeve (11), wherein, in the deflection position (I) with the spring element (7) relaxed, the spacer sleeve (11) is designed to be shorter in length than the spring element (7), and the spacer sleeve (11) is supported on the abutment (13) in the blocking position (II).

2. Wheel suspension system according to Claim 1, **characterized in that** the spring element (7) consists of a helical spring and, during wheel deflection operations, can be adjusted from the deflection position (I) at low wheel loads (F1) with a low spring rate to the blocking position (II) at high wheel loads (F2) and high wheel spring rates.

3. Wheel suspension system according to one of the preceding claims, **characterized in that,** in the deflection position (I), the spring element (7) is designed to be connected in series with the torsion-bar spring (2).

4. Wheel suspension system according to one of the preceding claims, **characterized in that,** in the blocking position (II), the spring element (7) is deactivated and the spacer sleeve (11) is supported on the abutment (13) and the torsion-bar spring (2) forms a single spring element.

5. Wheel suspension system according to Claim 1, **characterized in that** the spring element (7) consists of a helical spring in which the individual turns have a rectangular or square cross section.

## Revendications

1. Suspension de roue pour un véhicule automobile dotée de bras de guidage de roue et d'une suspension à ressort à torsion, avec un ressort à torsion (2) appuyé contre la carrosserie du véhicule dans les roulements (4, 5) et orienté dans la direction longitudinale du véhicule (FL), le ressort à torsion (2) comportant un dispositif de réglage (6) maintenu au niveau de l'extrémité libre qui interagit avec un élément de suspension (7), le dispositif de réglage (6) comprenant un levier angulaire (8) relié au ressort à torsion (2), ledit levier étant relié à l'élément de suspension (7) via une tige de réglage (9) et ledit élément prenant une position de suspension et de blocage (I et II), **caractérisée en ce que** le ressort à torsion (2) est relié à une tige compressible (3) maintenue de façon articulée contre un support de roue et s'étendant dans la direction transversale du véhicule (Fq) via un levier angulaire (3a) fixé au ressort à torsion (2), et que la tige de réglage (9) est reliée à une douille d'écartement (11) maintenant l'élément de suspension (7) entre une attache de douille (12) et un contre-palier (13) au niveau de la carrosserie du véhicule, l'élément de suspension (7) étant disposé sur la douille d'écartement (11), la douille d'écartement (11) étant réalisée de façon à être plus courte dans sa longueur dans la position de suspension (I) lorsque l'élément de suspension (7) est détendu que l'élément de suspension (7) et que la douille d'écartement (11) s'appuie dans la position de blocage (II) contre le contre-palier (13).

2. Suspension de roue selon la revendication 1, **caractérisée en ce que** l'élément de suspension (7) se compose d'un ressort à spirale et est réglable pour les systèmes de suspension de roue de la position de suspension (I) correspondant à des charges de roues réduites (F1) et à une vitesse de ressort réduite à la position de blocage (II) correspondant à des charges de ressort élevées (F2) et à des vitesses de ressort de roue élevées.

3. Suspension de roue selon l'une quelconque des revendications précédentes, **caractérisée en ce que** dans la position de suspension (I), l'élément de suspension (7) est réalisé en ligne avec le ressort à torsion (2).

4. Suspension de roue selon l'une quelconque des revendications précédentes, **caractérisée en ce que** dans la position de blocage (II), l'élément de suspension (7) est désactivé et que la douille d'écartement (11) appuie contre le contre-palier (13) et que le ressort à torsion (2) forme un seul élément de suspension.

5. Suspension de roue selon la revendication 1, **caractérisée en ce que** l'élément sur ressort (7) se compose d'un ressort à spirale doté de bobinages présentant respectivement une section transversale rectangulaire ou carrée.
